# EUROPÄISCHE PATENTSCHRIFT

(11) **EP 2 670 530 B1**
(45) Veröffentlichungstag und Bekanntmachung des Hinweises auf die Patenterteilung: **21.02.2018**
(21) Anmeldenummer: 11805425.3
(22) Anmeldetag: 27.12.2011
(51) Int. Cl.: B01L 3/14

(54) **FILTRATIONSBEHÄLTER**
FILTRATION CONTAINER
CONTENANT DE FILTRATION

(30) Priorität: 31.01.2011 DE 202011002149 U
(43) Veröffentlichungstag der Anmeldung: 11.12.2013
(73) Patentinhaber: Sartorius Stedim Biotech GmbH, 37079 Göttingen (DE)
(72) Erfinder: BIDDELL, Christopher, Stonehouse Gloucestershire GL10 3LH (GB)
(74) Vertreter: Stehl, Astrid
(86) Internationale Anmeldenummer: PCT/EP2011/006576
(87) Internationale Veröffentlichungsnummer: WO 2012/103914

(56) Entgegenhaltungen:
- EP-B1- 0 651 675
- DE-U1- 20 002 188
- US-A- 4 722 792
- US-A- 5 310 527
- US-A- 6 156 199
- US-A1- 2009 078 638
- US-B1- 6 719 896

## Beschreibung

### Gebiet der Erfindung

Die Erfindung bezieht sich auf einen Filtrationsbehälter, insbesondere zur Konzentration von Makromolekülen, der in ein Filtratgewinnungsröhrchen einsetzbar ist
mit einem oberen Abschnitt, einem sich axial an den oberen Abschnitt anschließenden mittleren Abschnitt und einem sich axial an den mittleren Abschnitt anschließenden unteren Abschnitt,
von denen
- der obere Abschnitt einen Probenbehälter bildet, der hohlzylindrisch ausgebildet ist und an seiner oberen Stirnseite eine Einlassöffnung aufweist,
- der sich nach unten hin verjüngende mittlere Abschnitt eine Filtrationskammer, die zwei einander gegenüberliegende nach unten hin aufeinander zulaufende Hauptwände sowie zwei diese an ihren lateralen Kanten verbindende, zwickelartige Verbindungswände aufweist, wobei wenigstens eine der Hauptwände ein Filterfenster zur Aufnahme eines flächigen Membranfilters aufweist und
- der untere Abschnitt eine sich an die Unterkante des Filterfensters anschließende Retentatkammer bildet, deren begrenzende Haupt- und Verbindungswände ebene Verlängerungen der Haupt- und Verbindungswände des mittleren Abschnitts sind.

### Stand der Technik

Eine Konzentration von Makromolekülen, insbesondere von Proteinproben, erfolgt in einem Volumenbereich von 500 µl bis 20 ml in Filtrationsbehältern, die in ein Filtratgewinnungsröhrchen eingesetzt und in Zentrifugaleinheiten über die Methode der Ultrafiltration konzentriert werden. Bei der Ultrafiltration ist es üblich, eine Retentatkammer als eine so genannte Dead-Stop-Tasche in den Filtrationsbehältern vorzusehen, die das Trockenlaufen der Probe verhindern sollen. Dabei wird die konzentrierte Probe in dem von der Retentatkammer gebildeten Totvolumen gesammelt und durch Pipettieren wieder gewonnen.

Die Wiedergewinnung des kompletten Konzentrats ist sehr kritisch, da das Volumen sehr klein ist. Das bedeutet, dass bereits Verluste von wenigen Mikrolitern zu prozentuell hohen Verlusten der finalen Ausbeute führen.

Aus der EP 0 651 675 B1 ist ein Filtrationsbehälter zur Konzentration von Makromolekülen bekannt, der in Verbindung mit einem Filtratgewinnungsröhrchen und einer Mikrokonzentriervorrichtung zur Konzentrierung von Makromolekülen aus einer Lösung durch Drehen der Mikrokonzentriervorrichtung in einer Zentrifuge in einem Retentatbehälter die konzentrierten Makromoleküle sammelt. Der bekannte Filtrationsbehälter besteht aus einem oberen Abschnitt, einem sich axial an den oberen Abschnitt anschließenden mittleren Abschnitt und einem sich axial anschließenden unteren Abschnitt. Der obere Abschnitt bildet dabei einen Probenbehälter, der hohlzylindrisch ausgebildet ist und der nach unten hin sich verjüngende mittlere Abschnitt bildet eine Filtrationskammer, die zwei einander gegenüberliegende nach unten hin aufeinander zulaufende Hauptwände sowie zwei diese an ihren lateralen Kanten verbindende Verbindungswände aufweist. Eine der Hauptwände bildet dabei ein Filterfenster zur Aufnahme eines flächigen Membranfilters. Der sich anschließende untere Abschnitt bildet eine sich an die Unterkante des Filterfensters anschließende Retentatkammer, deren begrenzende Haupt- und Verbindungswände ebene Verlängerungen der Haupt- und Verbindungswände des mittleren Abschnitts sind.

Auch wenn sich diese bekannte Vorrichtung grundsätzlich bewährt hat, hat sich gezeigt, dass eine vollständige Probenrückgewinnung sehr schwierig ist.

Die US-A-5,310,527 betrifft ein Zentrifugenröhrchen zur Pelletierung von Feststoffen aus Suspensionen, wobei die Feststoffe in Form eines Pellets an der Wand des Zentrifugenröhrchens niedergeschlagen und vom Überstand getrennt werden sollen. Das innere Volumen des Zentrifugenröhrchens ist in einen oberen und einen unteren Abschnitt gegliedert, wobei der untere Pelletierungsabschnitt durch zwei Oberflächen gebildet wird, die eine erste und zweite Ecke einschließen. Die erste Ecke ist spitzwinklig und die gegenüberliegende zweite Ecke stumpfwinklig ausgebildet. Das Zentrifugenröhrchen soll für die Erreichung der Abscheidewirkung so in die Zentrifuge eingebaut werden, dass die stumpfe Ecke den größten Abstand zur Rotationsachse aufweist. In dieser Ecke sollen sich die Feststoffe als Pellet niederschlagen. Das innere Volumen des Zentrifugenröhrchens ist verjüngend und/oder schlüssellochförmig ausgebildet. Die Verjüngung soll der Anpassung an kleinvolumige Suspensionen dienen. Durch diese schlitzförmig sich verjüngende Region verläuft benachbart dazu ein relativ weiter Führungskanal zur spitzwinkligen Ecke, aus der mit einer Pipette der Überstand entnommen werden soll. Nachteilig ist, dass diese Vorrichtung keine Filtrationsvorrichtung betrifft und mit ihr keine Aufkonzentrierung von Makromolekülen möglich ist.

Weiterhin ist aus der JP 62-11564 A1 ein Filtrationsbehälter zur Zentrifugalkonzentrierung von Makromolekülen bekannt. Ein im Wesentlichen hohlzylindrischer Behälter weist einen den Behälter in Längsrichtung unterteilenden zylindrische Einsatz mit einem abdichtenden Bund auf. Oberhalb des Bundes ist dabei ein schräg angeschnittener Ansatz angeordnet, dessen Eingangsöffnung von einer Filtermembran abgedeckt wird, die damit um einen Winkel zwischen 25 und 45° ansteigt. Zwischen dem Ansatz und der umgebenden Behälterwandung wird dabei eine ringförmige Retentatkammer gebildet, in der das Retentat gesammelt wird.

Auch mit dieser Vorrichtung erweist sich eine vollständige und definierte Probenrückgewinnung als sehr schwierig.

### Aufgabenstellung

Aufgabe der vorliegenden Erfindung ist es daher, einen Filtrationsbehälter anzugeben, der eine Retentatkammer aufweist, die eine praktisch vollständige Probenrückgewinnung ermöglicht.

### Darstellung der Erfindung

Diese Aufgabe wird in Verbindung mit dem Oberbegriff des Anspruches 1 dadurch gelöst, dass der Boden der Retentatkammer lateral einseitig abfallend ausgebildet ist, sodass eine erste Verbindungswand der Retentatkammer kürzer ist als die ihr gegenüberliegende zweite Verbindungswand und wobei der Boden der Retentatkammer gegenüber der horizontalen Unterkante des Filterfensters um einen Neigungswinkel zwischen >5° und 30° geneigt ist und der Boden eben ausgebildet ist und zu den Verbindungswänden einen gerundeten Übergang aufweist.

Durch den schräg abfallenden Boden der Retentatkammer wird sichergestellt, dass bei dem Pipettieren des Retentats aus der Retentatkammer eine praktisch vollständige Probenrückgewinnung der Probe bzw. des Retentats ermöglicht wird. Die Pipette muss lediglich mit ihrer Spitze benachbart zur zweiten Verbindungswand am Boden der Retentatkammer angesetzt werden.
Durch den gerundeten Übergang wird der Ablauf des Retentats zur tiefsten Stelle des Retentatbehälters hin begünstigst und die vollständige Absaugung mit einer Pipette verbessert.

Gemäß einer bevorzugten Ausführungsform der Erfindung sind die aufeinander zulaufenden Hauptwände eben ausgebildet, wobei die Verbindungswände Verlängerungen der hohlzylindrischen Wandlung des oberen Abschnitts sind. Durch die aufeinander zulaufenden Hauptwände wird das Entstehen bzw. die Ausbildung einer kleinvolumigen Retentatkammer begünstigt.

Gemäß einer weiteren bevorzugten Ausführungsform der Erfindung weist der flächige Membranfilter auf seiner der Filtrationskammer abgewandten Außenseite eine Filterabdeckung auf, die der Unterkante des Filterfensters oberhalb benachbart eine Mehrzahl von nebeneinander angeordneten Filtratkanälen aufweist.

Nach einer weiteren bevorzugten Ausführungsform der Erfindung sind die Filtratkanäle zu ihrer dem Membranfilter abgewandten Außenseite hin konisch erweitert ausgebildet. Die Filtratkanäle weisen dabei zum Membranfilter hin relativ kleine Öffnungen auf, die eine definierte Grenzlinie zur Filtratkammer bilden, wobei deren vergrößerte Auslassöffnungen den Filtratfluss in das Filtratgewinnungsröhrchen begünstigen.

Nach einer weiteren bevorzugten Ausführungsform der Erfindung ist mindestens die Retentatkammer aus dem Polymer Polystyrol, ausgebildet. Polystyrol hat den Vorteil, dass es chemisch inert ist und keine proteinbindenden Eigenschaften aufweist. Durch die erfindungsgemäße Ausbildung wird die Sammlung der konzentrierten Probe bzw. des Retentats in einem sehr kleinen Volumenraum, der zudem chemisch inert ist, ermöglicht.

Gemäß der Erfindung ist der Boden der Retentatkammer gegenüber der horizontalen Unterkante des Filterfensters um einen Neigungswinkel zwischen größer als 5° und 30° geneigt, bevorzugt um etwa 15°.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

### Kurzbeschreibungen der Zeichnungen

In den Zeichnungen zeigen:

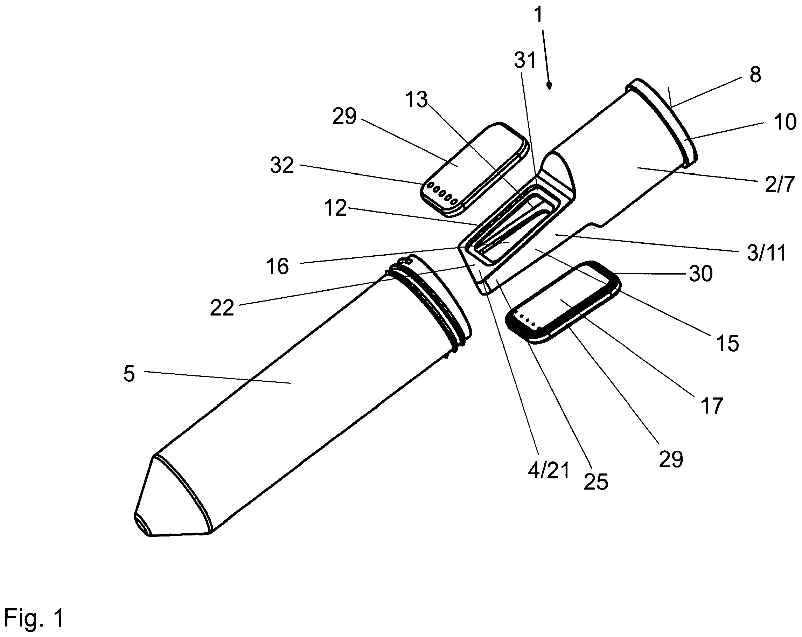

- Figur 1:: eine räumliche Darstellung eines Filtrationsbehälters mit Filtratgewinnungsröhrchen als Explosionsdarstellung ohne Verschlusskappe des Filtratgewinnungsröhrchens,

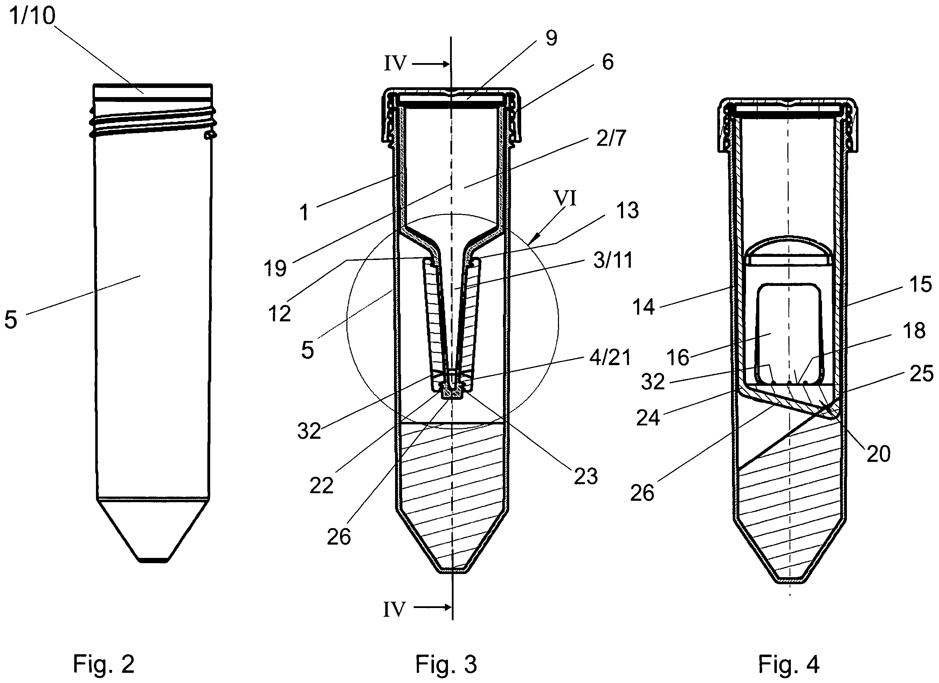

- Figur 2:: eine Seitenansicht des Filtratgewinnungsröhrchens von Figur 1,
- Figur 3:: eine Seitenansicht im Schnitt des Filtrationsbehälters von Figur 1 eingesetzt in das Filtratgewinnungsröhrchen von Figur 1 und einer aufgesetzten Verschlusskappe,
- Figur 4:: eine Seitenansicht im Schnitt des Filtratgewinnungsröhrchens von Figur 3 mit Filtrationsbehälter und Verschlusskappe entlang der Linie IV - IV geschnitten,

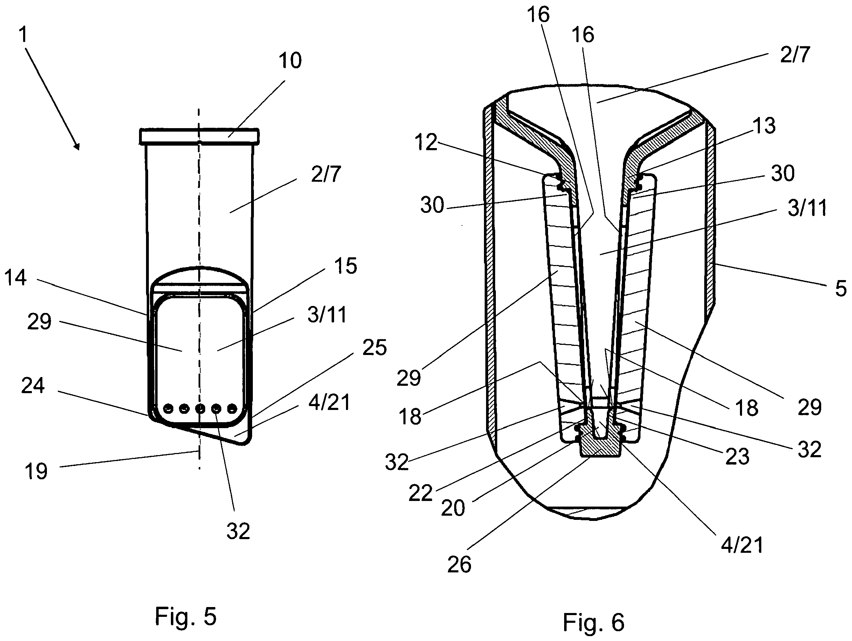

- Figur 5:: eine Seitenansicht des Filtrationsbehälters von Figur 4,
- Figur 6:: eine vergrößerte Darstellung der Einzelheit VI von Figur 3,

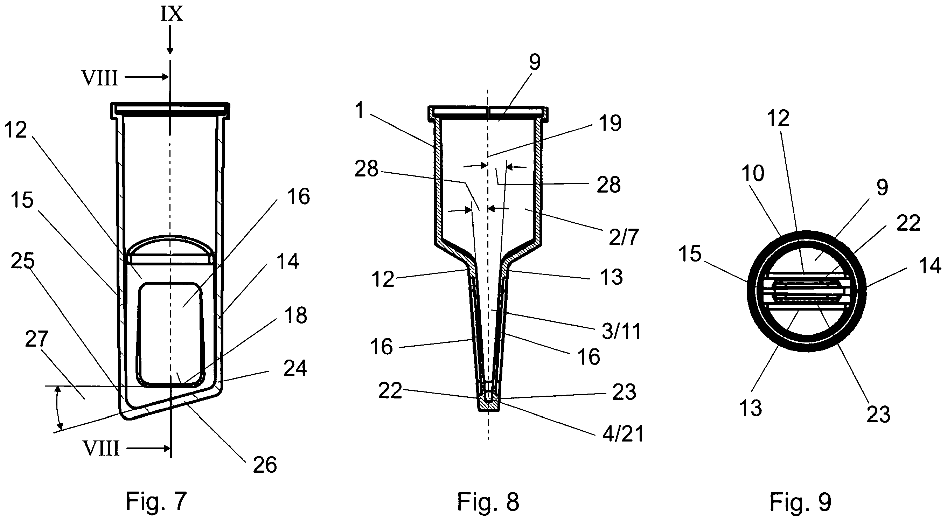

- Figur 7:: eine Rückansicht im Schnitt des Filtrationsbehälters von Figur 5 ohne Membranfilter und Filterabdeckung,
- Figur 8:: eine Seitenansicht des Filtrationsbehälters von Figur 7 entlang der Linie VIII - VIII geschnitten und
- Figur 9:: eine Draufsicht auf den Filtrationsbehälter von Figur 7 aus Richtung IX.

### Beschreibung der Ausführungsbeispiele

Ein Filtrationsbehälter 1 besteht im Wesentlichen aus einem oberen Abschnitt 2, einem mittleren Abschnitt 3 und aus einem unteren Abschnitt 4.

Der Filtrationsbehälter 1 ist in ein Filtratgewinnungsröhrchen 5 einsetzbar, das mit einer Verschlusskappe 6 verschließbar ist. Der obere Abschnitt 2 bildet einen Probenbehälter 7, der hohlzylindrisch ausgebildet ist und an seiner oberen Stirnseite 8 eine Einlassöffnung 9 aufweist.

An seinem oberen Ende weist der obere Abschnitt 2 einen umlaufenden Wulst 10 auf, die gegenüber dem Filtratgewinnungsröhrchen 5 als Anschlag dient.

An seinem der oberen Stirnseite 8 abgewandten unteren Ende geht der obere Abschnitt 2 in den mittleren Abschnitt 3 über. Der mittlere Abschnitt 3 verjüngt sich in vertikaler Richtung nach unten hin und bildet eine Filtrationskammer 11, die zwei einander gegenüberliegende nach unten hin aufeinander zulaufende Hauptwände 12, 13 sowie zwei diese an ihren lateralen Kanten verbindende zwickelartige Verbindungswände 14, 15 aufweist. In jeder der Verbindungswände 14, 15 ist ein Filterfenster 16 zur Aufnahme eines flächigen Membranfilters 17 angeordnet. Die Filterfenster 16 weisen jeweils eine zur Längsachse 19 des Filtrationsbehälters 1 quer verlaufende Unterkante 18 auf, an die sich der untere Abschnitt 4 in vertikaler Richtung nach unten anschließt. Der untere Abschnitt 4 bildet eine Retentatkammer 21, deren begrenzende Hauptwände 22, 23 mit Verbindungswänden 24, 25 Verlängerungen der Hauptwände 12, 13 und der Verbindungswände 14, 15 der Filtrationskammer 11 sind. Die Retentatkammer 21 wird in vertikaler Richtung nach unten hin von einem Boden 26 begrenzt. Der Boden 26 der Retentatkammer 21 ist lateral einseitig abfallend ausgebildet, sodass die erste Verbindungswand 24 der Retentatkammer 21 kürzer ist als die ihr gegenüberliegende zweite Verbindungswand 25. Der eben ausgebildete Boden 26 ist gegenüber der horizontalen Unterkante 18 des Filterfensters 16 um einen Neigungswinkel 27 von etwa 15° geneigt. Die aufeinander zulaufenden Hauptwände 12, 13 bilden gegenüber der Längsachse 19 jeweils einen Neigungswinkel 28 von etwa 4°.

Zur Aufnahme der konzentrierten Probe bildet die Retentatkammer unterhalb der Unterkante 18 ein Retentatvolumen 20 (Totraum).

In den Filterfenstern 16 sind jeweils die die Filterfenster dichtend verschließenden Membranfilter 17, die flächig ausgebildet sind, angeordnet. Die Membranfilter 17 sind jeweils auf ihrer der Filtrationskammer 11 abgewandten Außenseite von einer mit den Hauptwänden 12, 13 verbundenen Filterabdeckung 29 abgedeckt. Die Filterabdeckung 29 greift dabei mit einem innen liegenden Absatz 30 in eine umlaufende Aussparung 31 des Filterfensters 16 ein. Die Filterabdeckung 29 weist der Unterkante 18 des Filterfensters 16 oberhalb benachbart eine Mehrzahl von nebeneinander angeordneten Filtratkanälen 32 auf. Die Filtratkanäle 32 sind zu ihrer dem Membranfilter 17 abgewandten Außenseite hin konisch erweitert ausgebildet.

Der Filtrationsbehälter 1 ist aus dem Polymer Polystyrol ausgebildet.

### Bezugszeichenliste

- 1: Filtrationsbehälter
- 2: oberer Abschnitt
- 3: mittlerer Abschnitt
- 4: unterer Abschnitt
- 5: Filtratgewinnungsröhrchen
- 6: Verschlusskappe
- 7: Probenbehälter
- 8: obere Stirnseite
- 9: Einlassöffnung
- 10: umlaufende Wulst
- 11: Filtrationskammer
- 12: erste Hauptwand von 11
- 13: zweite Hauptwand von 11
- 14: erste Verbindungswand von 11
- 15: zweite Verbindungswand von 11
- 16: Filterfenster
- 17: Membranfilter
- 18: Unterkante
- 19: Längsachse
- 20: Retentatvolumen (Totraum)
- 21: Retentatkammer
- 22: erste Hauptwand von 21
- 23: zweite Hauptwand von 21
- 24: erste Verbindungswand von 21
- 25: zweite Verbindungswand von 21
- 26: Boden
- 27: Neigungswinkel von 21
- 28: Neigungswinkel von 12 bzw. 13
- 29: Filterabdeckung
- 30: Absatz
- 31: Aussparung
- 32: Filtratkanal

## Patentansprüche

1. Filtrationsbehälter (1), insbesondere zur Konzentration von Makromolekülen, der in ein Filtratgewinnungsröhrchen (5) einsetzbar ist,
mit einem oberen Abschnitt (2), einem sich axial an den oberen Abschnitt (2) anschließenden mittleren Abschnitt (3) und einem sich axial an den mittleren Abschnitt (3) anschließenden unteren Abschnitt (4),
von denen
- der obere Abschnitt (3) einen Probenbehälter (7) bildet, der hohlzylindrisch ausgebildet ist und an seiner oberen Stirnseite (8) eine Einlassöffnung (9) aufweist,
- der sich nach unten hin verjüngende mittlere Abschnitt (3) eine Filtrationskammer (11) bildet, die zwei einander gegenüberliegende nach unten hin aufeinander zulaufende Hauptwände (12, 13) sowie zwei diese an ihren lateralen Kanten verbindende, zwickelartige Verbindungswände (14, 15) aufweist, wobei wenigstens eine der Hauptwände (12, 13) ein Filterfenster (16) zur Aufnahme eines flächigen Membranfilters (17) aufweist und
- der untere Abschnitt (4) eine sich an die Unterkante (18) des Filterfensters (16) anschließende Retentatkammer (21) bildet, deren begrenzende Haupt-(22, 23) und Verbindungswände (24, 25) ebene Verlängerungen der Haupt- (12, 13) und Verbindungswände (14, 15) des mittleren Abschnitts (3) sind,
**dadurch gekennzeichnet,**
**dass** der Boden (26) der Retentatkammer (21) lateral einseitig abfallend ausgebildet ist, sodass eine erste Verbindungswand (24) der Retentatkammer (21) kürzer ist als die ihr gegenüberliegende zweite Verbindungswand (25), wobei der Boden (26) der Retentatkammer (21) gegenüber der horizontalen Unterkante (18) des Filterfensters (16) um einen Neigungswinkel (27) zwischen >5° und 30° geneigt ist und wobei der Boden (26) eben ausgebildet ist und zu den Verbindungswänden (24, 25) einen gerundeten Übergang aufweist.

2. Filtrationsbehälter nach Anspruch 1,
**dadurch gekennzeichnet,**
**dass** die aufeinander zulaufenden Hauptwände (12, 13) eben ausgebildet sind und dass die Verbindungswände (14, 15) Verlängerungen der hohlzylindrischen Wandung des oberen Abschnitts (2) sind.

3. Filtrationsbehälter nach einem der Ansprüche 1 und 2,
**dadurch gekennzeichnet,**
**dass** der flächige Membranfilter (17) auf seiner der Filtrationskammer (11) abgewandten Außenseite eine Filterabdeckung (29) aufweist, die der Unterkante (18) des Filterfensters (16) oberhalb benachbart eine Mehrzahl von nebeneinander angeordneten Filtratkanälen (32) aufweist.

4. Filtrationsbehälter nach Anspruch 3,
**dadurch gekennzeichnet,**
**dass** die Filtratkanäle (32) zu ihrer dem Membranfilter (17) abgewandten Außenseite hin konisch erweitert ausgebildet sind.

5. Filtrationsbehälter nach Anspruch 1,
**dadurch gekennzeichnet,**
**dass** die Retentatkammer (21) aus dem Polymer Polystyrol ausgebildet ist.

6. Filtrationsbehälter nach Anspruch 1,
**dadurch gekennzeichnet,**
**dass** der Neigungswinkel (27) etwa 15° beträgt.

## Claims

1. Filtration container (1), particularly for concentration of macromolecules, usable in filtrate recovery tubelets (5), with an upper section (2), a centre section (3) axially connected with the upper section (2) and a lower section (4) axially connected with the centre section (3), of which
- the upper section (3) forms a sample container (7), which is of hollow-cylindrical form and has an inlet opening (9) at its upper end (8),
- the downwardly tapering centre section (3) forms a filtration chamber (11), which has two mutually opposite main walls (12, 13) running towards one another in downward direction and two gusset-like connecting walls (14, 15) connecting these at the lateral edges thereof, wherein at least one of the main walls (12, 13) has a filter window (16) for reception of an areal membrane filter (17), and
- the lower section (4) forms a retentate chamber (21), which is connected with the lower edge (18) of the filter window (16) and the bounding main walls (22, 23) and connecting walls (24, 25) of which are planar extensions of the main walls (12, 13) and connecting walls (14, 15) of the centre section (3),
**characterised in that**
the base (26) of the retentate chamber (21) is formed to laterally slope away at one side so that a first connecting wall (24) of the retentate chamber (21) is shorter than the second connecting wall (25) opposite thereto, wherein the base (26) of the retentate chamber (21) is inclined relative to the horizontal lower edge (18) of the filter window (16) through an angle (27) of inclination between >5° and 30° and wherein the base (26) is formed to be planar and has a rounded transition to the connecting walls (24, 25).

2. Filtration container according to claim 1, **characterised in that** the main wall (12, 13) running towards one another are formed to be planar and that the connecting walls (14, 15) are extensions of the hollow-cylindrical wall of the upper section (2).

3. Filtration container according to one of claims 1 and 2, **characterised in that** the areal membrane filter (17) has on the outer side thereof remote from the filtration chamber (11) a filter cover (29) which has adjacent to and above the lower edge (18) of the filter window (16) a plurality of filtrate channels (32) arranged adjacent to one another.

4. Filtration container according to claim 3, **characterised in that** the filtrate channels (32) are formed to conically widen towards the outer side thereof remote from the membrane filter (17).

5. Filtration container according to claim 1, **characterised in that** the retentate chamber (21) is formed from the polymer polystyrol.

6. Filtration container according to claim 1, **characterised in that** the angle (27) of inclination is approximately 15°.

## Revendications

1. Contenant de filtration (1), en particulier pour la concentration de macromolécules, qui peut être inséré dans un tube d'extraction de filtrat (5),
comprenant une section supérieure (2), une section centrale (3) dans le prolongement axial de la section supérieure (2) et une section inférieure (4) dans le prolongement axial de la section centrale (3),
parmi lesquelles
- la section supérieure (3) forme un contenant à échantillons (7), qui est de forme cylindrique creuse et qui présente sur sa face frontale supérieure (8) un orifice d'entrée (9),
- la section centrale (3) effilée vers le bas forme une chambre de filtration (11), qui comprend deux parois principales (12, 13) opposées se rejoignant vers le bas ainsi que deux parois de liaison (14, 15) du type gousset reliant lesdites parois principales au niveau des bords latéraux de celles-ci, dans lequel au moins l'une des parois principales (12, 13) comprend une fenêtre de filtre (16) destinée à loger une membrane filtrante plate (17) et
- la section inférieure (4) forme une chambre de rétentat (21) dans le prolongement du bord inférieur (18) de la fenêtre de filtrat (16), chambre dont les parois principales (22, 23) de délimitation et les parois de liaison (24, 25) sont des prolongements plats des parois principales (12, 13) et des parois de liaison (14, 15) de la section centrale (3), **caractérisé**
**en ce que** le fond (26) de la chambre de rétentat (21) s'incline latéralement d'un côté, de sorte qu'une première paroi de liaison (24) de la chambre de rétentat (21) est plus courte que la deuxième paroi de liaison (25) qui lui est opposée, dans lequel le fond (26) de la chambre de rétentat (21) est incliné d'un angle d'inclinaison (27) compris entre >5° et 30° par rapport au bord inférieur horizontal (18) de la fenêtre de filtre (16) et dans lequel le fond (26) est plat et présente une transition arrondie en direction des parois de liaison (24, 25).

2. Contenant de filtration selon la revendication 1,
**caractérisé**
**en ce que** les parois principales (12, 13) se rejoignant sont plates et en ce que les parois de liaison (14, 15) sont des prolongements de la paroi de forme cylindrique creuse de la section supérieure (2).

3. Contenant de filtration selon l'une quelconque des revendications 1 et 2,
**caractérisé**
**en ce que** la membrane filtrante plate (17) présente sur sa face extérieure opposée à la chambre de filtration (11) un couvercle de filtre (29) qui présente dans la partie supérieure au voisinage du bord inférieur (18) de la fenêtre de filtre (16) une pluralité de canaux de filtrat (32) juxtaposés.

4. Contenant de filtration selon la revendication 3,
**caractérisé**
**en ce que** les canaux de filtrat (32) sont élargis de manière conique en direction de leur face extérieure opposée à la membrane filtrante (17).

5. Contenant de filtration selon la revendication 1,
**caractérisé**
**en ce que** la chambre de rétentat (21) est formée du polymère polystyrène.

6. Contenant de filtration selon la revendication 1,
**caractérisé**
**en ce que** l'angle d'inclinaison (27) atteint environ 15°.
